(19) Europäisches Patentamt
European Patent Office
Office européen des brevets

(11) **EP 1 607 216 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **05012727.3**

(22) Anmeldetag: **14.06.2005**

(51) Int Cl.:
***B32B 27/32*** *(2006.01)*

(54) **Folienlaminat mit wenigstens einer Diffusionssperrschicht und deren Verwendung bei Vakuumisolationspaneelen**

Multilayered foil with at least one diffusion barrier layer and its use for vacuum insulation panels

Feuille composite ayant une couche barrière de diffusion et son utilisation pour panneaux à isolation sous vide

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004028839**

(43) Veröffentlichungstag der Anmeldung:
**21.12.2005 Patentblatt 2005/51**

(73) Patentinhaber: **Wipak Walsrode GmbH & Co. KG 29699 Bornlitz (DE)**

(72) Erfinder:
• **Kaczmarek, Dirk Dr.**
  **28832 Achim (DE)**

• **Jacobsen, Sven Dr.**
  **29683 Bad Fallingbostel (DE)**

(74) Vertreter: **Läufer, Martina et al Gramm, Lins & Partner GbR Freundallee 13 30173 Hannover (DE)**

(56) Entgegenhaltungen:
DE-A1- 10 025 305       DE-A1- 10 047 043

• DATABASE WPI Section Ch, Week 198535 Derwent Publications Ltd., London, GB; Class A93, AN 1985-212424 XP002347468 & JP 59 140046 A (MATSUSHITA ELEC IND CO LTD) 11. August 1984 (1984-08-11)

**Beschreibung**

Die Erfindung betrifft ein Folienlaminat mit wenigstens einer Diffusionssperrschicht für die Herstellung eines extrem gas- und dampfdichten Vakuumisolationspaneels.

Folienlaminate oder -verbunde mit Diffusionssperrschichten werden für verschiedene Zwecke verwendet. Sogenannte Hochbarrierefolien mit besonders großer Gasdiffusionsdichte werden unter anderem für die Herstellung von Vakuumisolationspaneelen benötigt.

Unter Vakuumisolationspaneelen versteht man plattenförmige Elemente, bei denen Dämmstoffe beziehungsweise inerte Füllstoffe vollständig umhüllt werden und die möglichst gasdichte Hülle dann weitestgehend evakuiert wird. Sehr kleine Gasdiffusionswerte des Hüllenmaterials sind erforderlich, damit das einmal angelegte Vakuum möglichst lange (es werden wenigstens 10 bis 15 Jahre angestrebt) erhalten bleibt.

Die Höhe des Vakuums ist von dem verwendeten Dämm- oder Füllstoff und der erwarteten Isolationswirkung des Paneels abhängig. Ebenso richtet sich die erwartete Gasdichtigkeit der Umhüllung nach dem Verwendungszweck. Bei Vakuumisolationspaneelen (VIPs), die in nicht allzu langlebigen Gebrauchsgütern, wie Camping-Kühlschränken, Kühlboxen und dergleichen eingesetzt werden sollen, sind die Ansprüche geringer als bei einem für den Baubereich vorgesehenen Paneel, das das Vakuum so lange wie möglich halten sollte, um bezogen auf die Lebensdauer eines Hauses nicht ausgetauscht werden zu müssen.

Für das Umhüllungsmaterial von VIPs wurden zunächst Aluminiumfolien verwendet, die sehr gasdicht sind. Die metallische Umhüllung besaß jedoch den Nachteil, dass Wärmebrücken an den Paneelkanten vorhanden waren, die die Isolationswirkung insgesamt verminderten.

Heute werden für Vakuumisolationspaneele (VIP) sogenannte Hochbarrierefolien eingesetzt, die häufig aus Folienlaminaten mit drei bis fünf Schichten bestehen, wobei in der Regel einzelne, vorwiegend innen liegende Schichten metallisiert sind, d.h. mit einem Metall wie Aluminium bedampft, oder mit einer hochgasdiffusionsdichten Beschichtung z.B. aus Siliziumoxid ($SiO_x$) oder Metalloxiden der 2. oder 3. Hauptgruppe des periodischen Systems versehen sind. Als Metalloxide für die Beschichtung bzw. Bedampfung kommen hier in erster Linie Magnesiumoxid, Aluminiumoxid, Calziumoxid, und Berylliumoxid in Frage.

Folienlaminate mit hoher Gassperrwirkung sind beispielsweise aus der DE 100 25 305 A1 oder der DE 100 47 043 A1 bekannt. Aus DATABASE WPI Section Ch, Week 198535 Derwent Publications Ltd., London, GB; Class A93, AN 1985-212424 XP002347468 & JP 59 140046 A (Matsushita Elec Ind Co Ltd) 11. August 1984 (1984-08-11) ist es bekannt, die Folie, die das Vakuumisolationspaneel umgibt, zusätzlich mit einer Polyurethanschaumschicht zu umgeben, um die thermischen Isolationseigenschaften und die Gassperrwirkung weiter zu verbessern. Die bekannten Hochbarriereschichten besitzen bereits eine sehr gute Barrierewirkung, die jedoch noch weiter verbessert werden sollte.

Der Erfindung liegt daher die Aufgabe zugrunde, eine Hochbarrierefolie so auszubilden, dass die Barrierewirkung noch gesteigert wird.

Die Aufgabe wird gelöst durch ein Folienlaminat mit wenigstens einer Diffusionssperrschicht, das an wenigstens einer Oberfläche eine Heißsiegelschicht besitzt, die wenigstens eine Lage einer zusätzlichen Diffusionsbarriereschicht innerhalb eines gemeinsam extrudierten Verbundes enthält.

Das erfindungsgemäße Folienlaminat kann für die Herstellung von Vakuumisolatiospaneelen mit extremer Sperrwirkung für die verschiedensten Anwendungen eingesetzt werden.

Die Art der Siegelschicht unterliegt keinen besonderen Einschränkungen. Es können alle dem Fachmann für den Zweck des Heißsiegelns bekannten und geeigneten Heißsiegelschichten verwendet werden. Derzeit bevorzugt wird eine polyolefinische, insbesondere eine Polyethylen-Heißsiegelschicht. Allgemein können Polyolefin Homo- oder Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomere (IO) und Mischungen dieser Stoffe. Die Dicke der bei der Erfindung verwendeten Siegelschichten beträgt zwischen 20 und 100 $\mu$m, vorzugsweise 30 bis 60 $\mu$m.

Erfindungsgemäß ist vorgesehen, dass die Siegelschicht oder mehrere Siegelschichten zur noch weiteren Erhöhung der Sperrwirkung des Laminats mit einer zusätzlichen Barriereschicht ausgestattet sind. Als zusätzliche Barriereschicht, die in die Siegelschicht integriert ist, kann eine Schicht aus Polyvinylalkohol, insbesondere aus Ethylen/Vinylalkohol-Copolymerisat (EVOH), Polyethylenterephthalat (PET) oder Mischungen hieraus vorgesehen sein; weiter vorzugsweise enthält die integrierte Barriereschicht wenigstens einen der vorgenannten Bestandteile.

Ein möglicher Schichtaufbau für eine solche "Siegelschicht mit Sperrschicht" (PEX) wäre:

## PE/HV/Barriere/HV/PE

Hierbei bedeuten: Barriere = EVOH oder PET, HV = Haftvermittler und
PE = Polyethylen-Heißsiegelschicht.

Die Barriereschicht wird im Allgemeinen über einen üblichen und dem Fachmann für diesen Zweck geläufigen Haftvermittler an die Polyolefinschicht, im Beispiel eine Polyethylenschicht, angebunden. Die integrierte Siegel-Sperrschicht (PEX) kann durch Coextrusion der einzelnen Lagen hergestellt werden.

Mit zusätzlicher Sperrschicht in der Siegelschicht ausgerüstete Folienlaminate nach dieser Erfindung sind unter den Beispielen angegeben.

Durch die Verwendung der Siegelschicht mit Sperrfunktion (PEX) innerhalb des erfindungsgemäßen Folienlaminats kann die Barrierewirkung, das heißt die Gas- und Dampfdichtigkeit, nochmals erhöht werden.

Würde man anstelle des EVOHs in der Siegelschicht eine weitere metallisierte Folie aufkaschieren, so würde keine signifikante Erhöhung der Barriere eintreten, da die Folie bei jedem Kaschierschritt eine zusätzlich mechanische und thermische Belastung erfährt und sich dadurch die Barrierewirkung nicht addierend erhöht. Die bekannten Folien lassen sich daher durch Hinzunehmen weiterer, üblicher Diffusionssperrschichten nicht wesentlich verbessern.

Überraschenderweise wurde jedoch gefunden, dass eine zusätzliche coextrudierte Diffusionsbarriereschicht innerhalb wenigstens einer der außenliegenden Siegelschichten die Gassperrwirkung (i.A. wird die Durchlässigkeit gegenüber Wasserdampf und Sauerstoff gemessen) bis etwa verdoppeln kann.

Vorzugsweise wird die zusätzliche Diffusionsbarriereschicht wenigstens in die bei Gebrauch der Folie später außenliegende Schicht eingebaut. Hierdurch wird die Barriere bezogen auf den Gasdurchtritt schon vor der ersten Schicht erhöht, und es kann weniger Gas in das Innere der Folie eindringen, um dann weiter zu diffundieren.

Die Dicke der in wenigstens eine der Siegelschichten zusätzlich integrierten Diffusionsbarriereschicht beträgt vorzugsweise zwischen zwischen 0,5 und 10 $\mu$m, weiter vorzugsweise $\leq$ 5 $\mu$m bei einer Gesamtdicke der Siegelschicht von 20 bis 100 $\mu$m.

Als Diffusionssperrschichten innerhalb des Hochbarriere-Folienlaminats nach der Erfindung (außerhalb der Siegelschichten) können alle hierfür üblichen Schichten und Schichtkombinationen eingesetzt werden. Geeignete Schichtkombinationen sind unter anderem der DE 100 25 305 A1 oder der DE 100 47 043 zu entnehmen. Bevorzugt sind einseitig oder beidseitig beschichtete Polyester-, Polyamid- oder Polypropylenfolien, wobei die Beschichtung im Allgemeinen aufgedampft wird. Als diffusionshemmende Beschichtungen bzw. Bedampfungen werden in erster Linie Metallisierungen, vorzugsweise mit Aluminium, oder Beschichtungen aus Siliziumoxid (SiO$_x$) oder einem Metalloxid der 2. oder 3. Hauptgruppe verwendet. Die übliche Dicke von metallisierten Polyester- oder Polyamidfolien liegt beispielsweise um ca. 12 $\mu$m und von metallisierten Polypropylenfolien um ca. 18 $\mu$m.

Die Diffusionssperrschichten enthaltenden Folienlaminate oder Hochbarrierefolien umfassen Einzelfolien und/oder coextrudierte Verbundfolien, die durch Kaschierung miteinander verbunden sind. Es können auch bedampfte coextrudierte Schichten im Folienverbund enthalten sein, die selbst wenigstens eine Lage einer Gasdiffusionsbarriereschicht enthalten, vorzugsweise aus Polyvinylalkohol, insbesondere aus Ethylen/Vinylalkohol-Copolymerisate (EVOH). Die Bedampfungsdicke der Diffusionssperrschichten beträgt vorzugsweise zwischen ca. 30 und 100 nm.

In einer bevorzugten Ausführungsform ist vorgesehen, dass dem Folienlaminat zusätzlich wenigstens in der äußersten Siegelschichtlage wenigstens ein Flammschutzmittel zugesetzt ist, vorzugsweise 0,1 bis 30 Gew.-% bezogen auf die Masse der jeweiligen Siegelschichtlage, der das Mittel zugesetzt ist. Alternativ kann die äußere Oberfläche wenigstens einer Siegelschicht des Laminats mit einem Flammschutzmittel behandelt sein, das vorzugsweise aus Lösung aufgetragen wird.

Als Flammschutzmittel kann beispielsweise Antimontrioxid (SbO$_3$) allein oder in Verbindung mit einem halogenorganischen, vorzugsweise einem bromorganischen Flammschutzmittel verwendet werden. Das Flammschutzmittel kann in der Siegelschicht in gleichmäßiger feiner Verteilung vorliegen und in irgendeiner geeigneten Weise in die Siegelschicht eingebracht werden sein, z.B. während oder nach der Polymerisation als Additiv, pulverförmig dispergiert oder in Lösung, oder als "eingebautes" reaktives Flammschutzmittel während der Polymerisation.

Das Flammschutzmittel kann auch innerhalb nur einer Schicht eines coextrudierten Verbundes einer Siegelfolie vorliegen. Eine solche mit einem Flammschutzmittel ausgerüstete ein- oder mehrschichtige Polyolefin-Siegelfolie kann dann mit ein oder mehreren Diffusionssperrschichten, z.B. metallisierten Folien, durch Kaschieren verbunden sein.

Es ist auch möglich, mehrere Flammschutzmittel in Kombination zu verwenden, wobei dann die Gesamtmenge vorzugsweise nicht größer als 50 Gew.-%, weiter vorzugsweise nicht größer als 30 Gew.-%, bezogen auf die Polyolefinmasse, in der das Flammschutzmittel verteilt ist, sein sollte, um die Funktionalität der Siegelschicht sicher zu gewährleisten. Die wirksame Menge des Flammschutzmittels, die benötigt wird, um etwaige Brandschutzbestimmungen einzuhalten, kann der Fachmann experimentell bestimmen; die Werte hängen jeweils von der Art des Flammschutzmittels ab. Vorzugsweise ist vorgesehen, dass 0,1 bis 30 Gew.-%, weiter vorzugsweise 0,1 bis 10 Gew.-%, weiter vorzugsweise unter 5 Gew.-%, weiter vorzugsweise 1 bis 3 Gew.-%, bezogen auf die Polyolefinmasse, in der das Flammschutzmittel verteilt ist, in dem Folienverbund enthalten sind.

Alternativ können die Flammschutzmittel oder die Mischungen hieraus auch aus Lösung auf die Oberfläche der Siegelschicht aufgebracht werden. Die Masse der Beschichtung sollte sich in Gewichtsprozent ebenso zur Masse der Siegelschicht selbst verhalten, wie oben angegeben.

Wenn für die Herstellung des Paneels eine beidseitig siegelbare Hochbarrierefolie eingesetzt werden soll, kann das Brandschutzmittel bzw. Flammschutzmittel in oder an beiden außenliegenden Siegelschichten vorgesehen sein. Wird das Brandschutzmittel nur einseitig eingebracht, wäre diese Seite als Außenseite zu kennzeichnen, beispielsweise durch Bedrucken oder Einfärben.

Die Erfindung umfasst auch die Verwendung der oben näher beschriebenen Folienlaminate zur Herstellung eines Vakuumisolationspaneels, sowie ein auf diese Weise hergestelltes Vakuumisolationspaneel, bei dem ein inerter Füllstoff, bzw. ein Dämmstoff mit einer weitestgehend gasdichten Hülle aus einem Folienlaminat nach der Erfindung vollständig umschlossen ist. Das Paneel besitzt vorzugsweise die Form einer Platte, die aus dem Dämmstoff geschnitten oder einem pulverförmigen Füllstoff gepresst ist. Die Platte wird so mit dem erfindungsgemäßen Folienlaminat umhüllt, dass die zusätzliche Diffusionsbarriereschicht zumindest in oder an der äußeren, vom Dämmstoff entferntest gelegenene Schicht, die eine Heißsiegelschicht ist, ausgebildet ist.

BEISPIELE:

ohne Beschränkung der Allgemeinheit der Erfindung werden folgende, mögliche Schichtaufbauten für Folienlaminate nach der Erfindung angegeben:

Beispiel 1: PM/MPP/MP/PEX , einseitig siegelbares Folienlaminat; Schichtdicken (in $\mu$m): 12/18/12/50

Beispiel 2: PEX/PPM/MPP/MPP/PEX; Dicke (in $\mu$m): 50/18/18/18/50; PEX enthält PE mit EVOH

Wasserdampfdurchlässigkeit = WDDU (38 °C, 90 % r.F.) < 0,03 g/m$^2$·d, $O_2$-Durchlässigkeit = O2DU: < 0,01cm$^3$/m$^2$·d·bar (23 °C, 75 % r.F.)

PEX = PE/HV/EVOH/HV/PE;

PM oder MP = metallisierte Polyester-Folie (die Reihenfolge der Buchstaben zeigt die Lage der Metallisierung im Schichtaufbau an)

PPM oder MPP = metallisierte Polypropylen-Folie (die Reihenfolge der Buchstaben zeigt die Lage der Metallisierung im Schichtaufbau an)

/ = Schichtfolge, Position der Laminierung oder Kaschierung zwischen den Schichten

Die vorgenannten Schichtaufbauten sind nur beispielhaft und nicht beschränkend zu verstehen, beispielsweise kann, wie in der DE 100 47 043 beschrieben, im Innern des Schichtaufbaus auch noch eine weitere Barriereschicht aus Polyvinylalkohol, Ethylen/Vinylalkohol-Copolymerisat oder Polyethylen vorgesehen sein.

| Untersuchungen zur Wasserdampfdurchlässigkeit und Sauerstoffdurchlässigkeit | | | | | | | | |
|---|---|---|---|---|---|---|---|---|
| Folie Nr. | Klima °C | Klima % r.F. | Messung | [g/m$^2$d] | [g/m$^2$d] | [g/m$^2$d] | [g/m$^2$d] Mittelwert | Bemerkung |
| Beisp.2 | 38 | 90 | WDDU | 0,01 | 0,02 | 0,03 | 0,02 | nach 6 Tagen |
| Vergleich | 38 | 90 | WDDU | 0,04 | 0,04 | 0,04 | 0,04 | |
| | | | | | | | | |
| | | | | [cm$^3$/m$^2$·d·bar] | [cm$^3$/m$^2$·d·bar] | [cm$^3$/m$^2$·d·bar | [cm$^3$/m$^2$·d·bar] Mittelwert | |
| Beisp.2 | 23 | 75 | 02DU | 0,01 | 0,01 | | 0,01 | nach 6 Tagen |
| Vergleich | 23 | 75 | 02DU | <0,01 | | | <0,01 | |
| Vergleich: PE-Folie entsprechender Zusammensetzung und Dicke ohne Diffusionsbarriereschicht | | | | | | | | |

**Patentansprüche**

1. Folienlaminat mit wenigstens einer Diffusionssperrschicht für die Herstellung eines Vakuumisolationspaneels, **dadurch gekennzeichnet, dass** das Folienlaminat an wenigstens einer Oberfläche eine Heißsiegelschicht besitzt, die wenigstens eine Lage einer zusätzlichen Diffusionsbarriereschicht innerhalb eines gemeinsam extrudierten Verbundes enthält.

2. Folienlaminat nach Anspruch 1, **dadurch gekennzeichnet, dass** die in die Siegelschicht integrierte Diffusionsbarriereschicht Polyvinylalkohol, insbesondere Ethylen/Vinylalkohol-Copolymerisat (EVOH), Polyethylenterephthalat (PET) oder Mischungen hieraus enthält oder aus den vorgenannten Bestandteilen besteht.

3. Folienlaminat nach Anspruch 1 oder 2, **dadurch gekennzeichnet, dass** die einseitig oder beidseitig an der Oberfläche des Laminats vorhandene Siegelschicht eine Polyolefin-, vorzugsweise eine Polyethylen-Heißsiegelschicht ist.

4. Folienlaminat nach einem der Ansprüche 1 bis 3, **dadurch gekennzeichnet, dass** die Dicke der integrierten Difusionsbarriereschicht zwischen 0,5 und 10 $\mu$m, vorzugsweise $\leq$ 5 $\mu$m, beträgt, bei einer Gesamtdicke der Sigelschicht von 20 bis 100 $\mu$m.

5. Folienlaminat nach einem der Ansprüche 1 bis 4, **dadurch gekennzeichnet**, das das Laminat als Diffusionssperrschicht wenigstens eine metallisierte oder mit $SiO_x$ oder einem Metalloxid der 2. oder 3. Hauptgruppe bedampfte Polyesterfolie, Polyamidfolie und/oder Polypropylenfolie enthält.

6. Folienlaminat nach einem der Ansprüche 1 bis 5, **dadurch gekennzeichnet, dass** es aus Einzelschichten und/ oder coextrudierten Verbundschichten besteht, die durch Kaschieren verbunden sind.

7. Folienlaminat nach einem der Ansprüche 1 bis 6, **dadurch gekennzeichnet, dass** die Diffusionssperrschichten ein- oder beidseitig bedampfte Schichten sind.

8. Folienlaminat nach einem der Ansprüche 1 bis 7, **dadurch gekennzeichnet, dass** wenigstens einer im Laminat außenliegende Siegelschicht wenigstens ein Flammschutzmittel zugesetzt ist, vorzugsweise 0,1 bis 30 Gew.-% bezogen auf die Masse der jeweiligen Siegelschichtlage, der das Mittel zugesetzt ist.

9. Folienlaminat nach einem der Ansprüche 1 bis 7, **dadurch gekennzeichnet, dass** die äußere Oberfläche wenigstens einer Siegelschicht des Laminats mit einem Flammschutzmittel behandelt ist, das vorzugsweise aus Lösung aufgetragen wurde.

10. Folienlaminat nach Anspruch 8 oder 9, **dadurch gekennzeichnet, dass** als Flammschutzmittel Antimontrioxid und/ oder ein halogenorganisches, vorzugsweise bromorganisches Flammschutzmittel in der Heißsiegelschicht enthalten ist.

11. Folienlaminat nach einem der Ansprüche 1 bis 10, **dadurch gekennzeichnet, dass** die Bedampfungsdicke der Diffusionssperrschichten 30 bis 100 nm beträgt.

12. Verwendung des Folienlaminats nach einem der Ansprüche 1 bis 11 zur Herstellung eines Vakuumisolationspaneels.

13. Vakuumisolationspaneel, bei dem ein inerter Füllstoff mit einer weitestgehend gasdichten Hülle vollständig umschlossen und der umschlossene Raum weitgehend evakuiert ist, **dadurch gekennzeichnet, dass** die gasdichte Hülle ein Folienlaminat nach einem der Ansprüche 1 bis 11 ist.

**Claims**

1. A film laminate having at least one diffusion barrier layer for manufacturing of a vacuum insulation panel, **characterized in that** the film laminate has on at least one surface a heat-seal layer, which contains at least one coat of an additional diffusion barrier layer within the jointly extruded compound.

2. The film laminate according to claim 1, **characterized in that** the diffusion barrier layer integrated in the seal layer contains poly vinyl alcohol, in particular ethylene/vinyl alcohol copolymer (EVOH), polyethylene terephthalate (PET) or mixtures thereof, or consists of one of the aforementioned components.

3. The film laminate according to claim 1 or claim 2, **characterized in that** the seal layer existing on one side or on both sides of the surface of the laminate is a polyolefin layer and preferably a polyethylene heat seal layer.

4. The film laminate according to any one of the claims 1 to 3, **characterized in that** the thickness of the integrated diffusion barrier layer is between 0.5 and 10 $\mu$m, preferably $\leq$ 5 $\mu$m, at a total thickness of the seal layer of 20 to 100 $\mu$m.

5. The film laminate according to any one of the claims 1 to 4, **characterized in that** the laminate as a diffusion barrier layer contains at least one polyester film, polyamide film, and/or polypropylene film, which is metalized or is vaporized

with $SiO_x$ or with a metallic oxide of the 2. or 3. main group.

6. The film laminate according to any one of the claims 1 to 5, **characterized in that** it consists of individual layers and/or coextruded compound layers which are connected by lamination.

7. The film laminate according to any one of the claims 1 to 6, **characterized in that** the diffusion barrier layers are layers which are vaporized on one side or on both sides.

8. The film laminate according to any one of the claims 1 to 7, **characterized in that** to at least one outer seal layer of the laminate, a flame retardant is added, preferably 0.1 to 30 weight percent with regard to the mass of the respective seal layer coat to which the retardant is added.

9. The film laminate according to any one of the claims 1 to 7, **characterized in that** the outer surface of at least one seal layer of the laminate is treated with a flame retardant, which is preferably applied as a solution.

10. The film laminate according to claim 8 or claim 9, **characterized in that** as a flame retardant, antimony trioxide and/or a halogen-organic, preferably bromine-organic flame retardant is contained in the heat seal layer.

11. The film laminate according to any one of the claims 1 to 10, **characterized in that** the vaporization thickness of the diffusion barrier layers is 30 to 100 nm.

12. Use of the film laminate according to any one of the claims 1 to 11 for manufacturing vacuum insulation panels.

13. A vacuum insulation panel in which an inert filler is completely enclosed by a casing which is gas-tight to the largest extent, and the enclosed space is evacuated to a large extent, **characterized in that** the gas-tight casing is a film laminate according to any one of the claims 1 to 11.


**Revendications**

1. Feuille composite comportant au moins une couche barrière de diffusion pour la fabrication de panneaux isolants à vide, **caractérisée en ce que** la feuille composite possède sur au moins une surface, une couche de scellement à chaud qui contient au moins une feuille d'une couche barrière de diffusion supplémentaire dans un matériau composite extrudé conjointement.

2. Feuille composite selon la revendication 1, **caractérisée en ce que** la couche de barrière de diffusion intégrée dans la couche de scellement est constituée d'alcool de polyvinyle, notamment d'un copolymère d'éthylène/alcool de vinyle (EVOH), de polyéthylène-téréphtalate (PET) ou de mélanges de ceux-ci ou contient des composants précédemment cités.

3. Feuille composite selon la revendication 1 ou 2, **caractérisée en ce que** la couche de scellement se trouvant d'un côté ou des deux côtés de la surface du stratifié est une polyoléfine, de préférence une couche de scellement à chaud de polyéthylène.

4. Feuille composite selon l'une quelconque des revendications 1 à 3, **caractérisée en ce que** l'épaisseur de la couche barrière de diffusion intégrée est de 0,5 à 10 $\mu$m, de préférence, $\leq$ 5 $\mu$m, pour une épaisseur totale de la couche de scellement de 20 à 100 $\mu$m.

5. Feuille composite selon l'une quelconque des revendications 1 à 4, **caractérisée en ce que** le stratifié contient en tant que couche barrière de diffusion, au moins une feuille de polyester métallisée ou revêtue par vaporisation de $SiO_2$ ou d'un oxyde métallique des $2^{ème}$ ou $3^{ème}$ groupes principaux, une feuille de polyamide et/ou une feuille de polypropylène.

6. Feuille composite selon l'une quelconque des revendications 1 à 5, **caractérisée en ce qu'**elle est constituée de couches individuelles et/ou de couches co-extrudées qui sont liées par stratification.

7. Feuille composite selon l'une quelconque des revendications 1 à 6, **caractérisée en ce que** les couches barrières de diffusion sont des couches appliquées par vaporisation sur un ou les deux côtés.

**8.** Feuille composite selon l'une quelconque des revendications 1 à 7, **caractérisée en ce que** l'on ajoute à au moins une couche de scellement se trouvant à l'extérieur du stratifié, au moins un agent ignifugeant, de préférence de 0,1 à 30 % en poids par rapport à la masse des couches de scellement respectives auxquelles on ajoute l'agent.

**9.** Feuille composite selon l'une quelconque des revendications 1 à 7, **caractérisée en ce que** la surface extérieure d'au moins une couche de scellement du stratifié est traitée avec un agent ignifugeant qui a été appliqué de préférence en solution.

**10.** Feuille composite selon la revendication 8 ou 9, **caractérisée en ce qu'**elle contient comme agent ignifugeant, du trioxyde d'antimoine et/ou un agent ignifugeant halogéno-organique, de préférence bromo-organique dans la couche de scellement à chaud.

**11.** Feuille composite selon l'une quelconque des revendications 1 à 10, **caractérisée en ce que** l'épaisseur de revêtement par vaporisation des couches barrières de diffusion est de 30 à 100 nm.

**12.** Utilisation de la feuille composite selon l'une quelconque des revendications 1 à 11, pour fabriquer un panneau isolant à vide.

**13.** Panneau isolant à vide dans lequel une substance de remplissage inerte est complètement confinée dans une enveloppe largement imperméable aux gaz et l'espace confiné est largement évacué, **caractérisé en ce que** l'enveloppe imperméable aux gaz est une feuille composite selon l'une quelconque des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025305 A1
- DE 10047043 A1
- JP 59140046 A
- DE 10047043